# EUROPÄISCHE PATENTSCHRIFT

(11) **EP 0 542 212 B1**
(45) Veröffentlichungstag und Bekanntmachung des Hinweises auf die Patenterteilung: **27.09.1995**
(21) Anmeldenummer: 92119253.0
(22) Anmeldetag: 11.11.1992
(51) Int. Cl.: B08B 9/02, F16L 11/10

(54) **Vorrichtung zum Reinigen von Rohren**
Device for the cleaning of pipes
Dispositif pour le nettoyage de conduites

(30) Priorität: 12.11.1991 DE 9114022 U; 10.04.1992 DE 9205001 U
(43) Veröffentlichungstag der Anmeldung: 19.05.1993
(73) Patentinhaber: Veltrup, Elmar M., Dipl.-Ing., D-47804 Krefeld (DE)
(72) Erfinder: Veltrup, Elmar M., Dipl.-Ing., D-47804 Krefeld (DE)
(74) Vertreter: Stark, Walter, Dr.-Ing.

(56) Entgegenhaltungen:
- EP-A- 0 077 562
- WO-A-89/12513
- DE-A- 3 148 225
- GB-A- 2 211 267
- US-A- 3 805 462

## Beschreibung

Die Erfindung betrifft eine Vorrichtung zum Reinigen von Rohren mit einem in Längsrichtung antreibbaren, rotierenden Werkzeug, dem über einen flexiblen Hochdruckschlauch ein Druckmedium zugeführt wird, wobei der Hochdruckschlauch an einen Drehantrieb angeschlossen sowie durch eine Vorschubeinheit geführt ist.

Eine derartige Vorrichtung ist bekannt (DE 31 48 225 A1). Das Werkzeug ist ein Düsenkopf, aus dem Hochdruckwasser austritt, welches durch den Hochdruckschlauch zugeführt wird. Der Einsatz eines Hochdruckschlauches in Kombination mit einem Drehantrieb und einer Vorschubeinheit ermöglicht eine gute Kontrolle und Steuerbarkeit des Werkzeuges. Die Vorrichtung ist über Rohrlängen von mehreren 100 m einsetzbar und außerdem kurvengängig. Der zwischen dem Drehantrieb und der Mündung des zu reinigenden Rohres liegende Abschnitt des Hochdruckschlauches ist allerdings erheblichen Drehmomentbelastungen ausgesetzt, die dazu führen können, daß der Hochdruckschlauch ausknickt oder Schlaufen wirft.

Ferner ist es bekannt (EP 0 077 562 A2), als Werkzeug ein Schlagwerkzeug zu verwenden, das sich insbesondere für die Reinigung von Rohren, insbesondere Kanalrohren oder dergleichen eignet, die sehr harte und spröde Inkrustrierungen aufweisen, die mit üblichen Werkzeugen, welche mit Hochdruckwasserstrahlen arbeiten, nicht entfernt werden können.

Aufgabe der Erfindung ist es, eine Vorrichtung der eingangs beschriebenen Gattung so zu verbessern, daß der Hochdruckschlauch auch bei großen Drehmomentbelastungen nicht ausknickt bzw. keine Schlaufen wirft.

Diese Aufgabe wird dadurch gelöst, daß in den Hochdruckschlauch zumindest ein flexibler Stab einführbar ist, dessen Querschnitt kleiner ist als der Innenquerschnitt des Hochdruckschlauchs und der, im Betrieb in den Hochdruckschlauch eingeführt, diesen stabilisiert. Der Stab kann insbesondere ein glasfaserverstärkter Kunststoffstab sein oder aus Federstahl bestehen. Ein solcher Stab, der auch aus mehreren hintereinander in den Hochdruckschlauch einführbaren Stäben bestehen kann, verbessert die Stabilität des Hochdruckschlauches ganz erheblich, so daß der Hochdruckschlauch auch bei großen Drehmomentbelastungen nicht ausknickt bzw. keine Schlaufen wirft. Weil der Hochdruckschlauch für Transport- und Lagerzwecke aufgewickelt werden muß, kann der Stab bzw. können die Stäbe bei Transport und Lagerung nicht im Hochdruckschlauch verbleiben. Sie müssen vor Beginn der Reinigungsarbeit in den Hochdruckschlauch eingeführt werden und nach Beendigung der Arbeit wieder daraus entfernt werden.

Es versteht sich, daß die Stabilität des Hochdruckschlauches um so größer wird, je größer der Querschnitt und damit das Widerstandsmoment des Stabes ist. Bei Verwendung druckmediumbetriebener Werkzeuge muß der Querschnitt des Stabes aber kleiner sein als der Innenquerschnitt des Hochdruckschlauches bzw. kleiner sein als der Innenquerschnitt von zugeordneten Schlauchkupplungen, damit das druckmediumbetriebene Werkzeug noch mit Druckmedium versorgt werden kann.

Nach bevorzugter Ausführung der Erfindung soll in die Hohlwelle Druckluft einführbar sein und das Werkzeug ein pneumatisch antreibbares Schlagwerkzeug sein. Um die Führung des Hochdruckschlauches im zu reinigenden Rohr zu verbessern, können ein oder mehrere Stützringe vorgesehen werden, die mit Abstand vom Schlagwerkzeug bzw. mit gegenseitigem Abstand auf den Hochdruckschlauch aufgesetzt sind. Der Abstand kann in der Größenordnung von 1 m liegen.

Wird die Vorrichtung zum Reinigen von Rohren eingesetzt, die erheblich unter dem Bodenniveau liegen und nur über einen Schacht zugänglich sind, dann empfiehlt es sich, einen Führungsschlauch für den Hochdruckschlauch vorzusehen, der sich zwischen der Vorschubeinheit und dem Rohranfang erstreckt. Dadurch wird verhindert, daß der rotierende Hochdruckschlauch in diesem Bereich, z.B. im Schacht, ausknickt.

Damit größere Längen des Hochdruckschlauches beim Reinigen des Rohres nachgeführt werden können, sollte die Vorschubeinheit stationär und der Drehantrieb beweglich sein. Insbesondere kann der Drehantrieb auf einem Wagen angeordnet sein.

Im folgenden wird ein in der Zeichnung dargestelltes Ausführungsbeispiel der Erfindung erläutert; es zeigen:

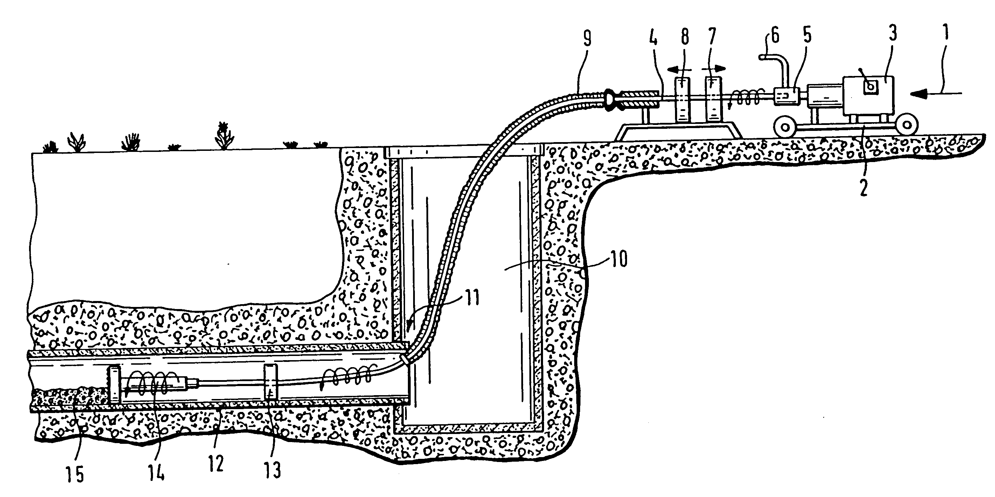

- Figur 1: schematisch eine Vorrichtung zum Reinigen von Kanalrohren,
- Figur 2: teilweise einen Längsschnitt durch einen Hochdruckschlauch mit zugeordneter Schlauchkupplung.

Auf einem in Richtung des Pfeils 1 verschieblichen Wagen 2 ist ein Drehantrieb 3 für einen flexiblen Hochdruckschlauch 4 angeordnet. Dem Hochdruckschlauch 4 wird in einer Drehdurchführung 5 Druckluft aus einer Druckluftleitung 6 zugeführt. Der Hochdruckschlauch 4 erstreckt sich dann durch eine zweiteilig ausgebildete Vorschubeinheit 7, 8, mit der eine einstellbare Axialkraft auf den Hochdruckschlauch 4 aufgebracht werden kann. Mit dem Teil 7 kann eine Rückzugskraft und mit dem Teil 8 eine Vorschubkraft aufgebracht werden.

Im Anschluß daran ist der flexible Hochdruckschlauch 4 innerhalb eines flexiblen Führungsschlauches 9 angeordnet, der sich im Anschluß an die stationäre Vorschubeinheit 7, 8 durch einen Schacht 10 bis zum Anfang 11 des zu reinigenden Rohres 12 erstreckt. Innerhalb des Rohres 12 ist auf den rotierenden, flexiblen Hochdruckschlauch 4 zumindest ein Stützring 13 aufgesetzt, der sich im Anstand von einem am Ende des Hochdruckschlauches 4 angeordneten Schlagwerkzeug 14 befindet. Das Schlagwerkzeug 14 arbeitet pneumatisch mit der durch den Hochdruckschlauch 4 zugeführten Druckluft. Durch die schlagende Bewegung des Schlagwerkzeuges 14 können feste Inkrustierungen 15 des Rohres 12 gelöst werden.

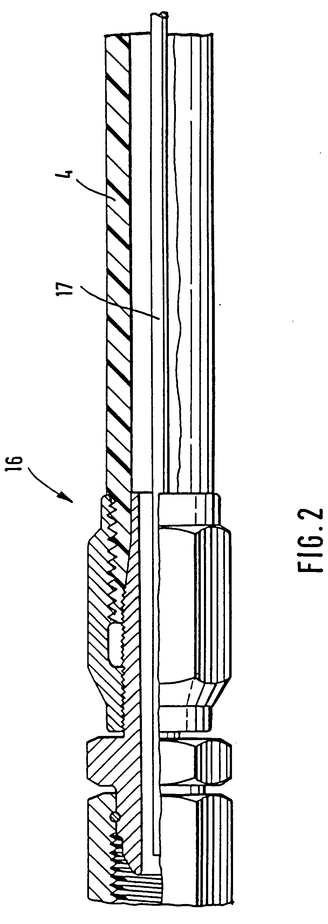

Wie man aus Fig. 2 entnimmt, ist in den Hochdruckschlauch 4 und ggf. vorhandene Schlauchkupplungen 16 ein glasfaserverstärkter Kunststoffstab 17 eingeführt, der die Stabilität des Hochdruckschlauches 4 verbessert. Bei größeren Längen des Hochdruckschlauches 4 empfiehlt es sich, mehrere glasfaserverstärkte Kunststoffstäbe hintereinander in den Hochdruckschlauch 4 einzuführen. Der Querschnitt des Kunststoffstabes 17 ist kleiner als der Innenquerschnitt des Hochdruckschlauches 4 bzw. der vorhandenen Schlauchkupplung 16, damit die Druckluft ungehindert zum Schlagwerkzeug 14 fließen kann.

Für Transport- und Lagerzwecke wird der Hochdruckschlauch 4 in der Regel aufgewickelt. Die dazu erforderliche Krümmung kann von den Kunststoffstäben 17 nicht aufgenommen werden. Deswegen werden die Kunststoffstäbe 17 vor Beginn der Reinigungsarbeiten in den gestreckten Hochdruckschlauch 17 eingeführt und nach Beendigung der Reinigungsarbeiten wieder entfernt.

## Patentansprüche

1. Vorrichtung zum Reinigen von Rohren (12) mit einem in Längsrichtung antreibbaren, rotierenden Werkzeug, dem über einen flexiblen Hochdruckschlauch (4) ein Druckmedium zugeführt wird, wobei der Hochdruckschlauch (4) an einen Drehantrieb (3) angeschlossen sowie durch eine Vorschubeinheit (7, 8) geführt ist, dadurch gekennzeichnet, daß in den Hochdruckschlauch (4) zumindest ein flexibler Stab (17) einführbar ist, dessen Querschnitt kleiner ist als der Innenquerschnitt des Hochdruckschlauches (4) und der, im Betrieb der Vorrichtung in den Hochdruckschlauch eingeführt, diesen stabilisiert.

2. Vorrichtung nach Anspruch 1, gekennzeichnet durch mehrere hintereinander in den Hochdruckschlauch (4) einführbare Stäbe (17).

3. Vorrichtung nach Anspruch 1 oder 2, dadurch gekennzeichnet, daß der Querschnitt des Stabes (17) kleiner ist als der Innenquerschnitt von zugeordneten Schlauchkupplungen (16).

4. Vorrichtung nach einem der Ansprüche 1 bis 3, dadurch gekennzeichnet, daß der Stab (17) aus glasfaserverstärktem Kunststoff besteht.

5. Vorrichtung nach einem der Ansprüche 1 bis 3, dadurch gekennzeichnet, daß der Stab (17) aus Federstahl besteht.

6. Vorrichtung nach einem der Ansprüche 1 bis 5, dadurch gekennzeichnet, daß in die Hohlwelle (4) Druckluft (6) einführbar ist und das Werkzeug ein pneumatisch antreibbares Schlagwerkzeug (14) ist.

7. Vorrichtung nach einem der Ansprüche 1 bis 6, gekennzeichnet durch eine Vorschubeinheit (7, 8) mit einstellbarer Axialkraft.

8. Vorrichtung nach einem der Ansprüche 6 oder 7, gekennzeichnet durch einen oder mehrere Stützringe (13), die mit Abstand vom Schlagwerkzeug (14) bzw. mit gegenseitigem Abstand auf die Hohlwelle (4) aufgesetzt sind.

9. Vorrichtung nach einem der Ansprüche 1 bis 8, gekennzeichnet durch einen Führungsschlauch (9) für die Hohlwelle (4), der sich zwischen der Vorschubeinheit (7, 8) und dem Rohranfang (11) erstreckt.

10. Vorrichtung nach einem der Ansprüche 1 bis 9, dadurch gekennzeichnet, daß die Vorschubeinheit (7, 8) stationär und der Drehantrieb (3) beweglich ist.

11. Vorrichtung nach Anspruch 10, dadurch gekennzeichnet, daß der Drehantrieb (3) auf einem Wagen (2) angeordnet ist.

## Claims

1. Apparatus for cleaning pipes (12), having a rotating tool, which is drivable in the longitudinal direction and has a pressure medium supplied thereto via a flexible high-pressure hose (4), the high-pressure hose (4) communicating with a rotary drive (3) and being guided by a feed unit (7, 8), characterised in that at least one flexible rod (17) is insertable into the high-pressure hose (4), the cross-section of said rod being smaller than the internal cross-section of the high-pressure hose (4), and said rod stabilising the high-pressure hose (4) as a result of being introduced therein during the operation of the apparatus.

2. Apparatus according to claim 1, characterised by a plurality of rods (17), which are insertable into the high-pressure hose (4) one after the other.

3. Apparatus according to claim 1 or 2, characterised in that the cross-section of the rod (17) is smaller than the internal cross-section of associated hose couplings (16).

4. Apparatus according to one of claims 1 to 3, characterised in that the rod (17) is formed from plastics material which has been reinforced by glass fibre.

5. Apparatus according to one of claims 1 to 3, characterised in that the rod (17) is formed from spring steel.

6. Apparatus according to one of claims 1 to 5, characterised in that compressed air (6) is insertable into the hollow shaft (4), and the tool is a pneumatically drivable striking tool (14).

7. Apparatus according to one of claims 1 to 6, characterised by a feed unit (7, 8) having an adjustable axial force.

8. Apparatus according to one of claims 6 or 7, characterised by one or a plurality of supporting rings (13), which are mounted on the hollow shaft (4) with a spacing from the striking tool (14) or respectively with a mutual spacing therebetween.

9. Apparatus according to one of claims 1 to 8, characterised by a guide hose (9) for the hollow shaft (4), which hose extends between the feed unit (7, 8) and the beginning of the pipe (11).

10. Apparatus according to one of claims 1 to 9, characterised in that the feed unit (7, 8) is stationary, and the rotary drive (3) is displaceable.

11. Apparatus according to claim 10, characterised in that the rotary drive (3) is disposed on a carriage (2).

## Revendications

1. Dispositif pour nettoyer des tuyaux (12) comprenant un outil rotatif pouvant être entraîné dans la direction longitudinale, outil qu'un tuyau souple de haute pression (4) alimente en fluide sous pression, sachant que le tuyau souple de haute pression (4) est raccordé à une commande de mouvement rotatif (3) et est guidé par une unité d'avancement (7, 8), caractérisé en ce que dans le tuyau de haute pression (4) peut être introduite au moins une tige flexible (17) dont la section est inférieure à la section intérieure du tuyau de haute pression (4) et qui stabilise le tuyau de haute pression en étant introduite dans ce dernier lorsque le dispositif fonctionne.

2. Dispositif selon la revendication 1, caractérisé par plusieurs tiges (17) pouvant être introduites l'une derrière l'autre dans le tuyau de haute pression (4).

3. Dispositif selon la revendication 1 ou 2, caractérisé en ce que la tige (17) a une section inférieure à la section intérieure de raccords à griffes pour tuyaux souples (16) qui lui sont associés.

4. Dispositif selon l'une des revendications 1 à 3, caractérisé en ce que la tige (17) est composée de matière plastique renforcée par des fibres de verre.

5. Dispositif selon l'une des revendications 1 à 3, caractérisé en ce que la tige (17) est composée d'acier pour ressorts.

6. Dispositif selon l'une des revendications 1 à 5, caractérisé en ce que de l'air comprimé (6) peut être introduit dans l'arbre creux (4) et en ce que l'outil est un outil de percussion (14) pouvant être actionné par un système pneumatique.

7. Dispositif selon l'une des revendications 1 à 6, caractérisé par une unité d'avancement (7, 8) dont la force axiale est réglable.

8. Dispositif selon l'une des revendications 6 et 7, caractérisé par une ou plusieurs bagues d'appui (13) qui sont placées sur l'arbre creux (4) respectivement avec un écart par rapport à l'outil de percussion (14) et avec un écart réciproque.

9. Dispositif selon l'une des revendications 1 à 8, caractérisé par un tuyau souple de guidage (9) pour l'arbre creux (4), qui s'étend entre l'unité d'avancement (7, 8) et le début du tuyau (11).

10. Dispositif selon l'une des revendications 1 à 9, caractérisé en ce que l'unité d'avancement (7, 8) est fixe et la commande du mouvement rotatif (3) mobile.

11. Dispositif selon la revendication 10, caractérisé en ce que la commande du mouvement rotatif (3) est placée sur un chariot (2).
